# EUROPÄISCHE PATENTSCHRIFT

(11) **EP 4 323 246 B1**
(45) Veröffentlichungstag und Bekanntmachung des Hinweises auf die Patenterteilung: **26.06.2024**
(21) Anmeldenummer: 22761214.0
(22) Anmeldetag: 05.08.2022
(51) Int. Cl.: B60T 11/18, B62L 3/00, F15B 7/08, F15B 15/20, B60T 11/236, F15B 15/14, F16J 1/00

(54) **GEBERKOLBEN, HYDRAULISCHE FAHRZEUGBREMSE UND VERFAHREN ZUM HERSTELLEN DES GEBERKOLBENS**
MASTER PISTON, HYDRAULIC VEHICLE BRAKE AND METHOD FOR PRODUCING THE MASTER PISTON
PISTON ÉMETTEUR, FREIN HYDRAULIQUE DE VÉHICULE ET PROCÉDÉ DE FABRICATION DU PISTON ÉMETTEUR

(30) Priorität: 05.08.2021 DE 102021208531
(43) Veröffentlichungstag der Anmeldung: 21.02.2024
(73) Patentinhaber: Trelleborg Sealing Solutions Germany GmbH, 70565 Stuttgart (DE)
(72) Erfinder: KOLODZIEJ, Jan, 70736 Fellbach (DE); FEUCHT, Julian, 72555 Metzingen (DE); GERGEN, Ralf, 72793 Pfullingen (DE)
(74) Vertreter: Kohler Schmid Möbus Patentanwälte
(86) Internationale Anmeldenummer: PCT/EP2022/072124
(87) Internationale Veröffentlichungsnummer: WO 2023/012344

(56) Entgegenhaltungen:
- EP-A1- 3 156 324
- EP-A2- 1 967 744
- DE-A1- 3 247 116
- DE-A1-102009 021 348
- DE-A1-102010 054 259
- DE-A1-102014 013 992
- DE-A1-102016 214 308
- DE-A1-102017 112 907
- DE-A1-102018 105 465
- US-A- 5 836 235

## Beschreibung

Die Erfindung betrifft einen Geberkolben für eine hydraulische Fahrzeugbremse gemäß Oberbegriff von Anspruch 1, eine hydraulische Fahrzeugbremse mit einem solchen Geberkolben sowie ein Verfahren zur Herstellung des Geberkolbens.

Aus dem Stand der Technik sind hydraulische Fahrzeugbremsen für Fahrzeuge mit einem Lenker, wie beispielsweise Fahrräder oder Motorräder, bekannt, die einen Geberkolben und einen Geberzylinder aufweisen. Der Geberzylinder hat eine Kolbenbohrung, in der der Geberkolben längs seiner Längsachse bzw. Bewegungsachse reziprok bewegbar angeordnet ist. Der Geberzylinder weist außerdem einen Ausgleichsbehälterraum auf, der über zumindest eine Öffnung mit der Kolbenbohrung zum Fluidaustausch verbunden ist. Der Geberkolben weist ein Kolbenelement auf und, um Bremsdruck in dem Geberzylinder durch Verschieben des Geberkolbens in der axialen Richtung aufzubauen, hat der Geberkolben eine Dichtung, die umfangsseitig des Kolbenelements angeordnet ist und die dynamisch dichtend an dem Geberzylinder anliegt. In einem Zustand, in dem nicht gebremst wird, ist der Geberkolben derart in der Kolbenbohrung angeordnet, dass ein definierter Druckraum über die Öffnung mit dem Ausgleichsbehälterraum verbunden ist. Bei einem Bremsvorgang ist der Geberkolben axial in Richtung seiner Längsachse derart in der Kolbenbohrung verschiebbar, dass die Dichtung über die Öffnung gleitet, sodass der Druckraum, in dem Bremsdruck herrscht, keine Verbindung über die Öffnung zu dem Ausgleichsbehälterraum hat. Wird der Bremsdruck entlassen, so gleitet der Geberkolben mit der Dichtung wiederrum über die Öffnung, sodass der Druckraum eine Verbindung zu dem Ausgleichbehälterraum hat. Zusätzlich weist der Geberkolben eine Sekundärdichtung auf, die umfangsseitig an dem Kolbenelement angeordnet ist. Beim Bremsvorgang ist die Öffnung zwischen der Dichtung und der Sekundärdichtung angeordnet.

Ein solcher Geberkolben ist beispielsweise aus der DE 10 2018 105465 A1 bekannt. Der bekannte Geberkolben ist ein einstückiger Ringkolben, der einen ersten Bereich aus einem ersten Kunststoffmaterial und einen zweiten (Führungs)Bereich aus einem anderen, verschleißfesteren, zweiten Kunststoffmaterial aufweist. Die beiden Bereiche werden durch ein Zweikomponenten-Spritzgussverfahren hergestellt.

Aus DE 10 2010 054259 A1 ist ein Kolben mit angespritzten Dichtungen und mit angespritzter Kolbenstange bekannt, wobei der Kunststoffkolben und die daran angelenkte Kunststoffkolbenstange in einem Mehrkomponenten-Spritzgussteil zusammengefasst sein können.

Es ist die Aufgabe der Erfindung, einen vorrichtungstechnisch einfach ausgebildeten und kostengünstig herzustellenden Geberkolben für eine hydraulische Fahrzeugbremse zu schaffen, mit dem der Druckraum zuverlässig abdichtbar ist. Eine weitere Aufgabe der Erfindung ist es, eine vorrichtungstechnisch einfach ausgebildete und kostengünstige Fahrzeugbremse mit Geberkolben zu schaffen.

Der erfindungsgemäße Geberkolben weist die in Anspruchs 1 angegebenen Merkmale auf. Die Aufgabe hinsichtlich der Fahrzeugbremse wird durch eine Fahrzeugbremse gemäß den Merkmalen des Anspruchs 11 gelöst.

Erfindungsgemäß ist ein Geberkolben für eine hydraulische Fahrzeugbremse, insbesondere eine Fahrradbremse, vorgesehen, der längs seiner Längsachse reziprok bewegbar in einer Kolbenbohrung eines Geberzylinders anordenbar ist. Des Weiteren weist der Geberkolben zumindest eine Dichtung auf, die vorzugsweise umfangsseitig an dem Geberkolben angeordnet ist. Mit anderen Worten ist eine Dichtung an dem Geberkolben vorgesehen, die diesen vorzugsweise in radialer Richtung umfasst und die vorzugsweise zumindest eine Dichtlippe oder Dichtkante aufweist, die in montiertem Zustand an dem Geberzylinder dichtend anliegt. Die Dichtung ist an dem Geberkolben angespritzt, d. h. durch ein Spritzgießverfahren ausgebildet. Mit anderen Worten ist der Geberkolben durch das Spritzgießverfahren mit der Dichtung umspritzt, sodass diese an dem Geberkolben ortsfest lagefixiert angebracht ist.

Durch den Geberkolben, der eine Dichtung aufweist, die durch ein Spritzgießverfahren gebildet ist, ergibt sich der Vorteil, dass eine Toleranzkette zwischen der Dichtung und der Kolbenbohrung, in der der Geberkolben reziprok bewegbar anordenbar ist, geringer ist. Bei einem herkömmlichen Geberkolben wird eine Dichtung auf einer bearbeiteten Fläche des Kolbenelements montiert, sodass die Toleranzkette des herkömmlichen Geberkolbens die Fläche des herkömmlichen Kolbenelements, auf der die Dichtung montiert ist, und die Dichtung selbst enthält. Durch den erfindungsgemäßen Geberkolben, bei dem die Dichtung durch den Spritzgussprozess montiert ist, ist somit die Toleranzverkettung gegenüber einem herkömmlichen Geberkolben verbessert. Zusätzlich ist auch die Anordnung der Dichtung über das Spritzgießverfahren sehr genau, sodass eine sehr genaue Positionierung der Dichtung gewährleistet ist. Durch die genaue Positionierung und die verbesserte Toleranzkette ist die Dichtungsperformance der Dichtung verbessert, wodurch insgesamt eine besonders genaue oder präzise Fertigungstoleranz erreicht ist. Dadurch ist eine Bremswirkung und eine Bremspräzision einer hydraulischen Fahrzeugbremse, die den erfindungsgemäßen Geberkolben enthält, verbessert. Durch die hohe Fertigungstoleranz kann zusätzlich gewährleistet sein, dass die Dichtung an der Gegenlauffläche, das heißt an der Kolbenbohrung in dem Geberzylinder, in allen Betriebssituationen dichtend anliegt. Zusätzlich können durch die hohe Fertigungstoleranz Reibkräfte im Gesamtsystem, das heißt in der hydraulischen Fahrzeugbremse, die den erfindungsgemäßen Geberkolben aufweist, vermindert sein.

Bei einem herkömmlichen Geberkolben wird, wie oben bereits beschrieben, die Dichtung auf einer Fläche des Kolbenelements montiert. Das heißt, diese muss bearbeitet werden, sodass die Dichtung möglichst genau positioniert werden kann. Dieser Arbeitsschritt entfällt bei dem erfindungsgemäßen Geberkolben, sodass Arbeitszeit eingespart werden kann und die Herstellungskosten des Geberkolbens insgesamt gesenkt werden können. Bei herkömmlichen Geberkolben müssen zudem Nuten, durch zum Beispiel spanende Bearbeitung, vorgesehen werden, um die Dichtung zu positionieren. Dies ist bei dem erfindungsgemäßen Geberkolben nicht notwendig, wodurch die Herstellungskosten zusätzlich gesenkt werden können. Außerdem entfällt bei dem erfindungsgemäßen Geberkolben auch die Montage der Dichtung, weil diese durch das Spritzgießverfahren direkt an dem Kolbenelement angebracht ist. Dadurch können weitere Kosten eingespart werden.

Nach einer bevorzugten Weiterbildung der Erfindung ist der Geberkolben als Zwei-Komponenten-Spritzgießteil ausgeführt, wobei eine Komponente das Kolbenelement und die weitere Komponente die Dichtung ist. Das heißt, dass bei einem ersten Spritzgießvorgang vorzugsweise das Kolbenelement hergestellt ist und bei einem weiteren Spritzgießvorgang, die zumindest eine Dichtung an dem Kolbenelement hergestellt ist. Beispiele entsprechender Zwei-Komponenten-Spritzgießverfahren oder Mehrkomponenten-Spritzgießverfahren sind Umsetztechnik-Spritzgießverfahren, Dreh- / Verschiebetechnik-Spritzgießverfahren und Kernrückzugtechnik-Spritzgießverfahren (Core-Back). Das Zwei-Komponenten-Spritzgießverfahren kann je nach Anwendung ausgewählt werden, sodass der Geberkolben möglichst kostengünstig und mit ausreichender Qualität herstellbar ist. Das Herstellen des Geberkolbens mit dem Kolbenelement und der zumindest einen Dichtung durch ein entsprechendes Zwei-Komponenten-Spritzgießverfahren ist vorteilhaft, da das Zwei-Komponenten-Spritzgießverfahren besonders gut automatisierbar ist. Zusätzlich ist die Produktionszeit um ein Vielfaches kürzer als bei einem herkömmlichen Geberkolben, bei dem das Kolbenelement beispielsweise als ein Drehteil ausgebildet ist und die Dichtung an dem Kolbenelement durch Überziehen der Dichtung montiert ist. Darüber hinaus kann bei einem Zwei-Komponenten-Spritzgussteil eine Trennebene des Kolbenelements in axialer Richtung verlaufen. Dies ist bei einem herkömmlichen Geberkolben, bei dem das Kolbenelement durch ein Spritzgießverfahren hergestellt ist und die Dichtung an einer Fläche des Kolbenelements montiert ist, mit einem erhöhten Leckagerisiko verbunden. Durch das Spritzgießverfahren mit axialer Trennebene entsteht ein Grat auf der Fläche, auf der die Dichtung montiert werden soll, sodass die Dichtung nicht dichtend auf der Fläche positioniert werden kann. Das heißt, bei einem herkömmlichen Geberkolben, dessen Kolbenelement eine axiale Trennebene hat, würde ein Leckagepfad in der Trennebene entstehen, da dort ein Grat durch das Spritzgießverfahren gebildet ist und die Dichtung somit nicht vollständig an dem Kolbenelement anliegt. Eine axiale Trennebene des Kolbenelements beim Spritzgießverfahren ist vorteilhaft, weil das Kolbenelement dadurch einfacher entformbar ist.

Zusätzlich weist der Geberkolben zumindest einen Führungsabschnitt auf, der zur Führung des Geberkolbens in montiertem Zustand in der Kolbenbohrung des Geberzylinders ausgebildet ist. Das heißt, der Geberkolben kann radial über den Führungsabschnitt geführt sein. Dies ist vorteilhaft, da der Geberkolben somit nicht in der Kolbenbohrung verkantet. Somit ist ein sicheres Betätigen der hydraulischen Fahrzeugbremse, die den erfindungsgemäßen Geberkolben enthält, möglich.

Der Führungsabschnitt ist zumindest teilweise, vorzugsweise im Wesentlichen vollständig, aus einem anderen Material als das Kolbenelement ausgebildet, und durch ein Spritzgießverfahren an dem Kolbenelement ausgebildet. Insbesondere kann der Führungsabschnitt aus einem Material ausgebildet sein, das besonders gute Gleiteigenschaften aufweist und gut durch das Spritzgießverfahren verarbeitbar ist. Beispielsweise kann der Führungsabschnitt aus Fluorpolymer, beispielsweise aus PVDF (Polyvinylidenfluorid), ETFE (Ethylen-Tetrafluorethylen-Copolymer) oder PFA (Perfluoralkoxy-Polymer), oder aus Polyolefin, beispielsweise aus PE (Polyethylen) oder PP (Polypropylen), ausgebildet sein. Insbesondere ist der Führungsabschnitt aus PVDF oder PP ausgebildet. Durch den spritzgegossenen Führungsabschnitt können die Reibkräfte in der Fahrzeugbremse mit dem erfindungsgemäßen Geberkolben weiter vermindert sein.

Insbesondere ist es möglich, dass der Geberkolben, der das Kolbenelement, die zumindest eine Dichtung, und den Führungsabschnitt enthält, durch ein MehrKomponenten-Spritzgießverfahren hergestellt ist. Bei einem ersten Spritzgießvorgang kann das Kolbenelement ausgebildet sein, während in einem weiteren Spritzvorgang oder zumindest zwei weiteren Spritzgießvorgängen die Dichtung und der Führungsabschnitt hergestellt sind. Mit anderen Worten kann die Dichtung in einem zweiten Spritzgießvorgang und der Führungsabschnitt in einem dritten Spritzgießvorgang oder der Führungsabschnitt in einem zweiten und die Dichtung in einem dritten Spritzgießvorgang hergestellt sein. Es ist auch möglich, dass die Dichtung und der Führungsabschnitt in einem gemeinsamen Spritzgießvorgang hergestellt sind.

Der Führungsabschnitt ist vorzugsweise derart ausgebildet, dass dieser in radialer Richtung, vorzugsweise gummielastisch oder zähelastisch verformbar ist, sodass ein Festklemmen des Geberkolbens verhindert werden kann. Dazu kann der Führungsabschnitt aus einem geeigneten Material ausgebildet sein und/oder eine Form des Führungsabschnitts ist derart ausgebildet, dass eine Deformation des Führungsabschnitts in radialer Richtung möglich ist. Insbesondere wird dadurch, dass der Führungsabschnitt verformbar oder deformierbar ist, die Lebensdauer der hydraulischen Fahrzeugbremse erhöht, die den erfindungsgemäßen Geberkolben hat, da beispielsweise bei einem herkömmlichen Geberkolben, der beispielsweise aus POM (Polyoxymethylen) ausgebildet ist, mit der Zeit ein Klemmen des Geberkolbens wegen Quellvorgängen der Materialen des Geberkolbens in dem Fluid auftritt. Dies ist durch den radial verformbaren Führungsabschnitt verhindert. Der Führungsabschnitt kann in einer radialen Richtung gummi- oder zähelastisch verformbar sein.

Der Führungsabschnitt des Geberkolbens ist nach der Erfindung vorzugsweise derart ausgebildet, dass dieser, insbesondere regelmäßig, in Umfangsrichtung beabstandete Elemente aufweist, die zur Führung des Geberkolbens ausgebildet sind, während zwischen den Elementen Fluid, beispielsweise Bremsflüssigkeit oder Hydrauliköl, strömen kann. Mit anderen Worten kann der Führungsabschnitt radiale Aussparungen aufweisen, die insbesondere regelmäßig beabstandet voneinander sind, und die vorzugsweise von einer axialen Seite des Führungsabschnitts zu der anderen axialen Seite des Führungsabschnitts durchgängig ausgebildet sind. Dadurch kann Fluid durch die Aussparungen von einer axialen Seite des Führungsabschnitts zu der anderen axialen Seite des Führungsabschnitts strömen. Dies ist vorteilhaft, da somit die Dichtung, die auf einer axialen Seite des Führungsabschnitts angeordnet ist, durch das Fluid, dass durch den Führungsabschnitt strömt, benetzt/geschmiert sein kann, wodurch die Lebensdauer der hydraulischen Fahrzeugbremse, die den Geberkolben aufweist, erhöht werden kann. Auch der Führungsabschnitt ist somit durch das durchfließende Fluid geschmiert. Mit anderen Worten kann durch den Führungsabschnitt mit den Elementen einer Mangelschmierung des Führungsabschnitts und/oder der Dichtung vorgebeugt werden.

Insbesondere sind die Elemente des Führungsabschnitts rippenförmig ausgebildet und ragen radial nach außen von dem Kolbenelement weg. Zwischen den, insbesondere in gleichmäßigem Abstand, in Umfangsrichtung beabstandeten rippenförmigen Elementen kann das Fluid in axialer Richtung strömen.

In einem weiteren Ausführungsbeispiel der Erfindung können die Elemente auch beispielsweise wabenförmig ausgebildet sein, wobei sich die wabenförmigen Elemente in radialer Richtung von dem Kolbenelement weg erstrecken. Die Elemente können umfangsseitig und/oder in axialer Richtung voneinander beabstandet sein. Es ist beispielsweise möglich, dass zumindest zwei Reihen von wabenförmigen Elementen in axialer Richtung nebeneinander angeordnet sind, wobei sich eine jeweilige Reihe umfangsseitig um das Kolbenelement erstreckt. Insbesondere können die wabenförmigen Elemente sich in axialer Richtung teilweise überlappen.

Es ist erfindungsgemäß auch möglich, dass die Aussparungen zwischen den Elementen Y-förmig ausgebildet sind, wobei die Aussparungen sich in axialer Richtung erstrecken. Mit anderen Worten kann sich ein Abschnitt einer jeweiligen Aussparung, insbesondere parallel zur axialen Richtung, von der einen axialen Seite des Führungsabschnitts, die vorzugsweise von der Dichtung wegweist, in Richtung der anderen axialen Seite des Führungsabschnitts erstrecken. Von der anderen axialen Seite können sich jeweils zwei weitere Abschnitte einer jeweiligen Aussparung, die umfangsseitig voneinander beabstandet sind, in Richtung des Abschnitts, der sich von der axialen Seite des Führungsabschnitts, der vorzugsweise von der Dichtung weg weist, erstreckt, sodass die drei Abschnitte die jeweilige Y-förmige Aussparung bilden.

Insbesondere ist der Führungsabschnitt auf einer Niederdruckseite der Dichtung angeordnet und die Dichtung liegt vorzugsweise mit einer seitlichen Umfangsseite, die sich in radialer Richtung erstreckt, an dem Führungsabschnitt an. Dies ist vorteilhaft, da, wenn die Dichtung bei einem Bremsvorgang über eine Öffnung gleitet, die die Kolbenbohrung mit einem Ausgleichbehälterraum verbindet, die Dichtung von dem Führungsabschnitt gestützt ist. Somit ist gewährleistet, dass die Dichtung nicht umstülpt.

In einem Ausführungsbeispiel kann der Führungsabschnitt derart ausgebildet sein, dass dieser die Dichtung teilweise in radialer Richtung umfasst. Mit anderen Worten ist der Führungsabschnitt vorzugsweise auf einer axialen Seite der Dichtung vorgesehen, insbesondere auf einer Niederdruckseite der Dichtung, und übergreift die Dichtung radial in axialer Richtung teilweise. Die Dichtung kann beispielsweise verschiedene Bereiche aufweisen, wobei ein Bereich einen kleineren Außenumfang als der andere Bereich hat. Der Bereich mit dem kleineren Außenumfang kann radial außen von dem Führungsabschnitt umfasst sein. Es ist auch möglich, dass der Außenumfang der Dichtung von einer axialen Seite, die dem Führungsabschnitt zugewandt ist, zu der anderen axialen Seite, insbesondere linear, größer wird und der Führungsabschnitt dementsprechend einen sich vergrößernden Innenumfang aufweist, wobei der Außenumfang der Dichtung und der Innenumfang des Führungsabschnitts teilweise aneinander anliegen.

Der Führungsabschnitt kann in einem weiteren Ausführungsbeispiel zwei Segmente aufweisen, wobei ein jeweiliges Segment auf einer jeweiligen axialen Seite der Dichtung angeordnet ist. Mit anderen Worten kann der Führungsabschnitt geteilt sein, wobei ein jeweiliger Teil auf einer jeweiligen axialen Seite der Dichtung angeordnet sein kann. Diese ist vorteilhaft, da somit die Dichtung beidseitig gestützt ist und die Führung verbessert ist.

Der Führungsabschnitt kann nach der Erfindung eine Abstreiflippe und/oder ein Lippenelement aufweisen, dass sich von dem Führungsabschnitt radial nach außen wegerstreckt. Ist die Abstreiflippe auf der Niederdruckseite angeordnet oder ist der Führungsabschnitt derart angeordnet, dass dieser nicht fluidseitig der Dichtung angeordnet ist, so schützt die Abstreiflippe vorzugsweise vor Eindringen von Schmutz und Wasser. Das Lippenelement kann auch als eine zusätzliche Fluiddichtung ausgebildet sein.

Zusätzlich kann in die Dichtung eine Feder integriert sein, durch die die Dichtkante oder Dichtlippe radial nach außen mit einer Federkraft beaufschlagt ist. Die Feder kann beispielsweise aus einer Mehrzahl von Federelementen ausgebildet sein, die von dem Kolbenelement radial nach außen vorstehen. Insbesondere haben die Federelemente einen regelmäßigen Abstand in Umfangsrichtung zueinander. Die Feder ist beispielsweise derart ausgebildet, dass diese eine Trichterform oder eine Konusform ausbildet. Das heißt, ein jeweiliges Federelement erstreckt sich vorzugsweise von einer Niederdruckseite zu einer Hochdruckseite und in einer radialen Richtung nach außen. Das heißt, ein jeweiliges Federelement ist vorzugsweise unter einem Winkel, beispielsweise einem Winkel von 45 °, relativ zur Längsachse L des Geberkolbens angeordnet.

Die Feder kann nach der Erfindung insbesondere integraler Bestandteil des Kolbenelements sein, das heißt, mit dem Kolbenelement einstückig hergestellt sein.

Es ist alternativ auch möglich, dass die Feder als ein zum Kolbenelement separates Element ausgeführt ist. Dieses kann beispielsweise am Kolbenelement montiert werden, bevor das Kolbenelement mit der Dichtung umspritzt wird.

Die Integration der Feder in die Dichtung ist vorteilhaft, da somit eine besonders homogene Kraftsteuerung/Kontaktpressung der Dichtkante oder Dichtlippe der Dichtung gegen die Innenfläche des Geberzylinders ermöglicht wird. Dadurch verbessert sich auch die Kraftbalance in Umfangsrichtung der Dichtung bei Druckbeaufschlagung dieser, wodurch die Reibung bei Bewegung des erfindungsgemäßen Geberkolbens in dem Geberzylinder gemindert ist. Daraus folgt ein verminderter Verschleiß.

Des Weiteren kann durch die Feder eine Verschleißkompensation erfolgen, da die Federkraft auf die Dichtkante oder Dichtlippe wirkt. Außerdem ist die Dichtlippe oder Dichtkante durch das Federelement ausgesteift und gegenüber einem unerwünschten Umstülpen oder Umklappen der Dichtlippe/Dichtkante geschützt. Zusätzlich kann durch die Feder eine genauere Definition einer Dichtkanten- oder Dichtlippenposition erfolgen, wodurch sich beispielsweise ein Druckpunkt beim Betätigen der hydraulischen Fahrzeugbremse, die den erfindungsgemäßen Geberkolben aufweist, verbessert.

In einem bevorzugten Ausführungsbeispiel weist der Geberkolben zusätzlich zumindest eine weitere Dichtung auf. Diese ist insbesondere derart angeordnet, dass bei Betätigung der hydraulischen Fahrzeugbremse, die den Geberkolben aufweist, die Öffnung, die die Kolbenbohrung mit dem Ausgleichbehälterraum verbindet, zwischen den Dichtungen angeordnet ist. Die weitere Dichtung kann gemäß einem oder mehrerer der oben beschriebenen Aspekte ausgebildet sein.

Zusätzlich kann der Geberkolben in einem weiteren bevorzugten Ausführungsbeispiel einen zweiten Führungsabschnitt aufweisen. Der weitere Führungsabschnitt kann gemäß einem oder mehrerer der oben beschriebenen Aspekte ausgebildet sein. Der zweite Führungsabschnitt kann insbesondere zumindest eine Abstreiflippe aufweisen, die sich von diesem radial nach außen erstreckt und in montiertem Zustand an der Kolbenbohrung anliegt, ein Eindringen von Schmutz und Wasser zu verhindern.

In einer bevorzugten Ausführungsform der Erfindung weist der Geberkolben zwei Dichtungen und zwei Führungsabschnitte auf.

Der Geberkolben oder das Kolbenelement kann/können zumindest teilweise aus einem Metall, insbesondere aus Aluminium, ausgebildet sein. Vorzugsweise ist der Geberkolben/das Kolbenelement zumindest teilweise, vorzugsweise im Wesentlichen vollständig aus einem Kunststoff, insbesondere aus PA (Polyamid) und/oder PPA (Polyphthalamid) und/oder PPS (Polyphenylensulfid) ausgebildet. PPA ist bevorzugt. Es ist möglich, dass, wenn der Geberkolben aus einem Kunststoff hergestellt ist und durch ein Spritzgießverfahren hergestellt ist, dieser zumindest ein Einlegeteil, beispielsweise aus Metall, aufweist. Das Einlegeteil kann beispielsweise die Feder sein. Auch andere Einlegeteile sind möglich, beispielsweise um die Steifigkeit des Geberkolbens zu erhöhen.

Die Dichtung kann zumindest teilweise, vorzugsweise im Wesentlichen vollständig, aus Elastomer, insbesondere HNBR (Hydrierter Acrylnitrilbutadien-Kautschuk) und/oder NBR (Nitrilkautschuk) und/oder FKM (Fluorkautschuk), ausgebildet sein. Es ist auch möglich, dass die Dichtung zumindest teilweise, vorzugsweise im Wesentlichen vollständig, aus zumindest einem thermoplastischen Elastomer, wie beispielsweise thermoplastischem Polyurethan-Elastomer (TPU), hergestellt ist. Prozesstechnisch ist ein Mehrkomponentenspritzguss mit dieser Materialfamilie anwendbar. Die vorangegangenen Werkstoffe sind besonders vorteilhaft, wenn das Fluid Hydrauliköl ist. Ist das Fluid eine Bremsflüssigkeit, beispielsweise DOT 3.0 oder DOT 4.0 oder DOT 5.1 ist, kann die Dichtung zumindest teilweise, insbesondere im Wesentlichen vollständig, aus EPDM (Ethylen-Propylen-Dien-Kautschuk) ausgebildet sein. Auch andere Werkstoffe sind möglich. Es ist vorteilhaft, wenn der Werkstoff der Dichtung eine Beständigkeit gegen Hydrauliköl und/oder Bremsflüssigkeit hat und/oder zur Verarbeitung durch ein Spritzgießverfahren geeignet ist.

Die hydraulische Fahrzeugbremse gemäß Anspruch 11 weist erfindungsgemäß einen vorstehend erläuterten Geberkolben auf.

Die hydraulische Fahrzeugbremse kann derart ausgebildet sein, dass diese zumindest einen Geberzylinder aufweist. Der Geberzylinder kann eine Kolbenbohrung haben, in der der Geberkolben längs seiner Längsachse L reziprok bewegbar angeordnet ist. Der Geberzylinder kann außerdem einen Ausgleichsbehälterraum aufweisen, der über zumindest eine Öffnung mit der Kolbenbohrung zum Fluidaustausch verbunden sein kann. In einem Zustand, in dem nicht gebremst wird, ist der Geberkolben vorzugsweise derart in der Kolbenbohrung angeordnet, dass ein definierter Druckraum über die Öffnung mit dem Ausgleichsbehälterraum verbunden ist. Bei einem Bremsvorgang ist der Geberkolben insbesondere derart in der Kolbenbohrung verschiebbar, so dass die Dichtung über die Öffnung gleitet, sodass der Druckraum, in dem Bremsdruck herrscht, keine Verbindung über die Öffnung zu dem Ausgleichsbehälterraum hat. Wird der Bremsdruck entlassen, so gleitet die Dichtung wiederrum vorzugsweise über die Öffnung, sodass der Druckraum eine Verbindung zu dem Ausgleichbehälterraum hat.

Die hydraulische Fahrzeugbremse kann insbesondere eine Fahrzeugbremse für ein Fahrzeug mit Lenker, etwa ein Fahrrad, ein E-Bike, ein Pedelec, ein Elektroroller oder Motorrad sein, wobei eine Betätigungseinrichtung für die Fahrzeugbremse an dem Lenker angeordnet sein kann. Insbesondere ist die Fahrzeugbremse eine hydraulische Fahrradbremse oder eine Kraftradbremse.

Bei einem erfindungsgemäßen Verfahren zum Herstellen des Geberkolbens gemäß Anspruch 13 wird die Dichtung am Kolbenelement angespritzt, d. h. im Wege eines Spritzgießverfahrens an dem Kolbenelement angebracht.

Zusätzlich kann zumindest auch ein Führungsabschnitt, der aus einem anderen Material als das Kolbenelement ausgebildet ist, durch ein Spritzgießverfahren an dem Kolbenelement angebracht werden.

Im Folgenden ist die Erfindung anhand von in der Zeichnung dargestellten Ausführungsbeispielen näher erläutert. In der Zeichnung zeigen:
- Fign. 1a, 1b: ein Geberkolben in einer Schnittdarstellung (Fig. 1a) und in einer ausschnittsweisen Schnittdarstellung (Fig. 1b);
- Fig. 2: einen weiteren Geberkolben in einer perspektivischen Schnittdarstellung;
- Fign. 3a, 3b: einen Geberkolben in einer ausschnittsweisen Schnittdarstellung (Fig. 3a) und in einer ausschnittsweisen perspektivischen Schnittdarstellung (Fig. 3b);
- Fig. 4: einen Geberkolben in einer ausschnittsweisen Schnittdarstellung;
- Fig. 5: einen Geberkolben in einem perspektivischen Detailausschnitt;
- Fig. 6: einen Geberkolben in einem perspektivischen Detailausschnitt;
- Fig. 7: den Geberkolben gemäß Fig. 1a in einer Detaildarstellung;
- Fig. 8: einen Geberkolben in einer ausschnittsweisen Schnittdarstellung; und
- Fig. 9: ein Blockschaltbild des erfindungsgemäßen Verfahrens zum Herstellen des Geberkolbens.

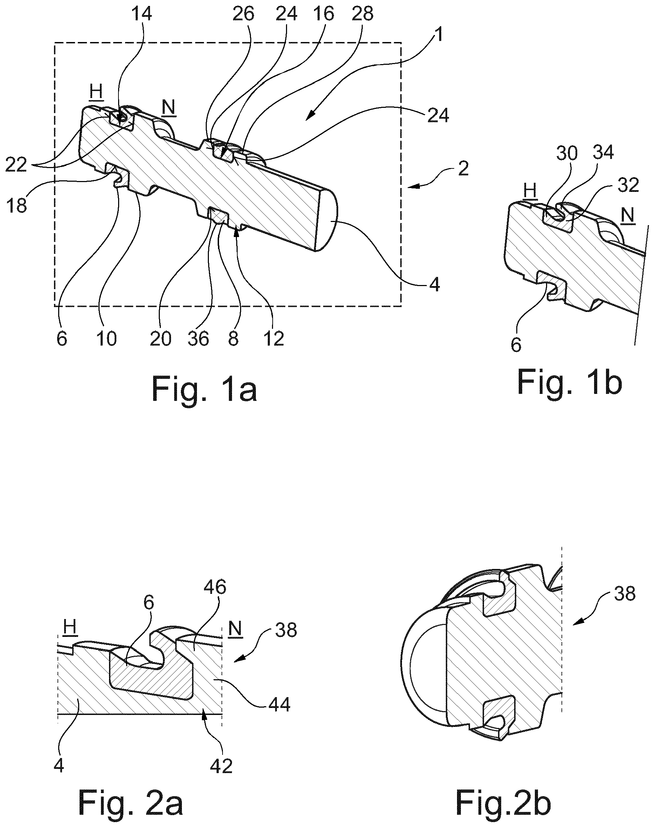

**Fig. 1a** zeigt einen Geberkolben 1 für eine hydraulische Fahrzeugbremse 2. Die Fahrzeugbremse 2 ist in Fig. 1a durch eine gestrichelte Linie angedeutet. Der Geberkolben 1 umfasst ein Kolbenelement 4 und zwei Dichtungen **6,** 8. Die Dichtungen 6, 8 sind in einer zur Längsachse des Geberkolbens 1 axialen Richtung voneinander beabstandet angeordnet. Die Dichtung 6 ist eine primäre Dichtung und die Dichtung 8 ist eine sekundäre Dichtung. Des Weiteren weist der Geberkolben 1 zwei Führungsabschnitte **10, 12** zur Führung des Geberkolbens 1 in einem Geberzylinder der Fahrzeugbremse 2 auf.

Das Kolbenelement 4 ist rotationsymmetrisch ausgebildet und weist zwei umfangsseitige Nuten **14, 16** für die Dichtungen 6, 8 auf. Die Nuten 14, 16 sind voneinander beabstandet angeordnet. Die Nuten 14, 16 sind hier rechteckig abgestochen, wobei aber auch andere Nutformen möglich sind. Die Nuten 14, 16 können sich in Größe und Form voneinander unterscheiden oder auch gleich sein. Die Dichtungen 6, 8 sind am Kolbenelement angespritzt. Die Dichtungen 6, 8 liegen jeweils an drei Seiten an der jeweiligen Nut 14, 16 an. Das heißt, die Dichtungen 6, 8 liegen jeweils mit ihren jeweiligen inneren Umfangsseiten **18, 20** und jeweils mit ihren jeweiligen seitlichen Umfangsseiten **22, 24** an den jeweiligen Nuten 14, 16 an.

Der Führungsabschnitt 10 ist auf einer Niederdruckseite N der Dichtung 6 angeordnet und stützt diese in Richtung der Niederdruckseite N ab. Mit anderen Worten liegt die Dichtung 6 an einer seitlichen Umfangsseite 22 auf der Niederdruckseite N an dem Führungsabschnitt 10 an.

Der Führungsabschnitt 12 hat zwei Segmente **26, 28,** die auf einer jeweiligen axialen Seite der Dichtung 8 angeordnet sind. Die Segmente 26, 28 stützen die Dichtung 8 jeweils an den seitlichen Umfangsseiten 24 in der axialen Richtung ab.

In **Fig. 1b** ist gezeigt, dass die Dichtung 6 innenumfangsseitig einen Fußabschnitt **30** aufweist. Der Fußabschnitt 30 erstreckt sich in der axialen Richtung und umgreift das Kolbenelement 4 in einer radialen Richtung. Des Weiteren hat die Dichtung 6 einen Verbindungsabschnitt 32, der sich von dem Fußabschnitt 30 an einer axialen Seite des Fußabschnitts 30, in diesem Ausführungsbeispiel auf der Niederdruckseite N, in radialer Richtung nach außen erstreckt und einen Dichtkantenabschnitt **34,** der sich von dem Fußabschnitt 30 axial in Richtung einer Hochdruckseite H weg erstreckt und radial nach außen, sodass eine Dichtkante der Dichtung 6 an einem Geberzylinder, der in Fig. 1b nicht gezeigt ist, dichtend anliegt.

Die Dichtung 8, vgl. Fig. 1a, ist in axialer Richtung symmetrisch ausgebildet und weist in ihrer axialen Mittel eine Ausballung 36 auf, die sich in radialer Richtung nach außen erstreckt, sodass eine apikale Dichtkante der Dichtung 8 an dem Geberzylinder dichtend anliegt.

**Fig. 2a** zeigt einen Geberkolben 1 dessen Führungsabschnitt **42** sich von dem Führungsabschnitt 10 der Fig. 1 unterscheidet. Der Führungsabschnitt 42 übergreift hier die Dichtung 6 abschnittsweise in einer radialen Richtung und zusätzlich in einer axialen Richtung. Das heißt, der Führungsabschnitt 42 hat einen Grundabschnitt **44,** der radial nach außen kragt, und einen Übergreifungsabschnitt **46,** der in axialer Richtung in Richtung der Hochdruckseite H ragt und die Dichtung abschnittsweise in radialer Richtung umfasst. Mit anderen Worten bildet der Führungsabschnitt 42 eine in etwa C-förmige Aussparung aus, die in axialer Richtung und in Richtung der Hochdruckseite H offen ist, und in die die Dichtung 6 eingefügt ist. **Fig. 2b** zeigt den Geberkolben 1 aus einer anderen Perspektive.

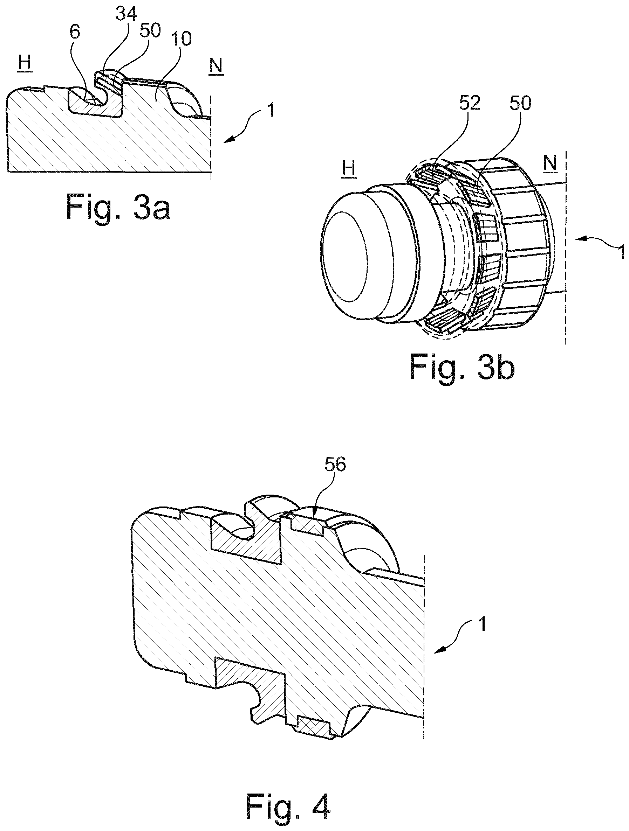

**Fig. 3a** zeigt einen weiteren Geberkolben 1, der sich von dem Geberkolben 1 der Fig. 1 im Wesentlichen darin unterscheidet, dass eine Feder 50 in die Dichtung 6 bzw. in deren Material integriert ist. Die Feder **50** kragt von dem Führungsabschnitt 10 in Richtung der Hochdruckseite H und radial nach außen aus. Die Feder 50 kann beispielsweise einstückig mit dem Kolbenelement 4 durch ein Spritzgießverfahren hergestellt sein. Es ist aber auch möglich, dass die Feder 50 mit der Dichtung umspritzt ist. Durch die Feder 50 ist der Dichtkantenabschnitt 34 der Feder 6 mit einer Federkraft beaufschlagt, sodass die Dichtkante radial nach außen gedrückt wird, um an dem Geberzylinder dichtend anzuliegen.

Gemäß **Fig. 3b** kann die Feder 50 aus einer Mehrzahl von Federelementen **52** ausgebildet sein, die in Umfangsrichtung voneinander beabstandet angeordnet sind.

**Fig. 4** zeigt einen Geberkolben 1 mit einem Führungsabschnitt **56,** der aus einem anderen Material ausgebildet ist als das Kolbenelement 4. Das heißt, der Geberkolben 1 ist durch ein Mehrkomponenten-Spritzgießverfahren ausgebildet, wobei der Führungsabschnitt 56 eine Komponente ausbildet.

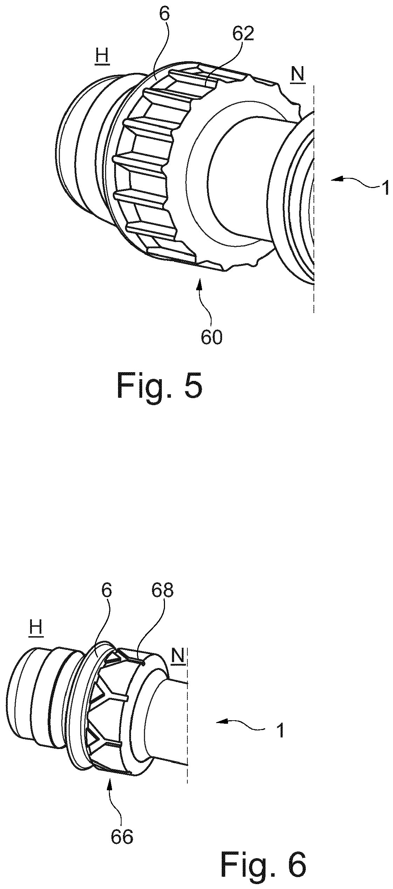

In **Fig. 5** ist ein Geberkolben 1 gezeigt, der einen Führungsabschnitt 60 mit rippenförmigen Vorsprünge 62 aufweist, die sich in axialer Richtung des Geberkolbens 1 erstrecken. Die Vorsprünge 62 stehen in einer radialen Richtung nach außen weg und sind in Umfangsrichtung voneinander regelmäßig beabstandet angeordnet. Die Vorsprünge 62 dienen der Führung des Geberkolbens 1. Dadurch, dass zwischen den Vorsprüngen 62 Fluid strömen kann, ist gewährleistet, dass der Führungsabschnitt 60 im Betriebseinsatz des Geberkolbens 1 ausreichend geschmiert ist. Die Dichtung 6 kann dadurch in axialer Richtung beiderseitig geschmiert werden.

In **Fig. 6** ist ein Geberkolben 1 gezeigt, der einen Führungsabschnitt 66 mit Y-förmigen Aussparungen 68 aufweist, die in Umfangsrichtung regelmäßig voneinander beabstandet angeordnet sind. Ein erster Abschnitt einer jeweiligen Aussparung 68 kann sich parallel zur axialen Richtung von der Niederdruckseite N zur Hochdruckseite H erstrecken. Von der Hochdruckseite erstrecken sich jeweils zwei Abschnitte einer jeweiligen Aussparung 68, die umfangsseitig voneinander beabstandet sind, und die sich von der Hochdruckseite H zu der Niederdruckseite N einander annähern, sodass die drei Abschnitte die jeweilige Y-förmige Aussparung 68 bilden.

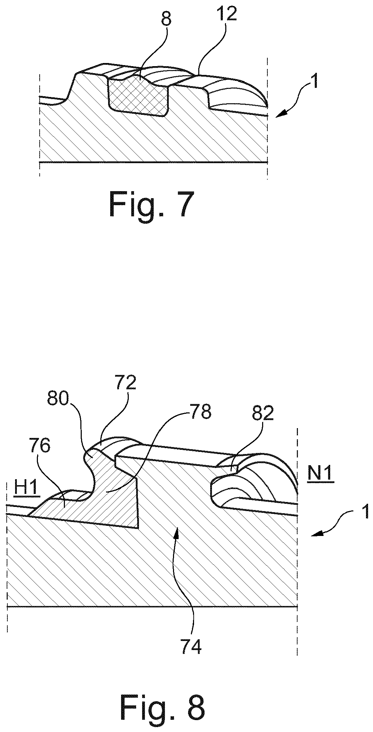

In **Fig. 7** ist der Geberkolben 1 gemäß Fig. 1 abschnittsweise vergrößert dargestellt, wobei die Dichtung 8 und der Führungsabschnitt 12 im Detail gezeigt sind.

**Fig. 8** zeigt einen Geberkolben 1 mit einer sekundären Dichtung 72 und einem zweiten Führungsabschnitt 74. Die Dichtung 72 weist einen Fußabschnitt 76 auf, der sich axialer Richtung erstreckt und der eine innere Umfangsfläche der Dichtung 72 enthält. Von diesem erstreckt sich ein Verbindungsabschnitt 78 in radialer Richtung auf einer Niederdruckseite N1 der Dichtung 72 weg. Ein Dichtkantenabschnitt 80 erstreckt sich von dem Verbindungsabschnitt 78 in axialer Richtung in Richtung Hochdruckseite H1 der Dichtung 72 und in radialer Richtung weg, wobei der Dichtkantenabschnitt 80 eine Dichtkante aufweist, die dichtend an dem Geberzylinder, der nicht gezeigt ist, anliegt.

Der Führungsabschnitt 74 übergreift die Dichtung 72 in axialer Richtung, sodass der Verbindungsabschnitt 78 in radialer Richtung teilweise von dem Führungsabschnitt 74, von radial außen betrachtet, übergriffen ist. Auf der Niederdruckseite N1 weist der Führungsabschnitt 74 eine Abstreiflippe 82 auf. Diese kann angespritzt sein oder einstückig mit dem Führungsabschnitt 74 ausgebildet sein. Diese kann ein Eindringen von Schmutz verhindern.

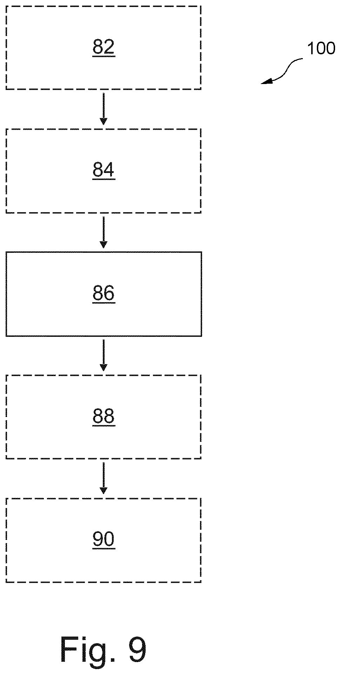

**Fig. 9** zeigt ein Blockdiagramm eines Verfahrens 100 zum Herstellen eines Geberkolbens 1, beispielsweise gemäß Fig. 1. In einem optionalen ersten Schritt **82** wird ein Einlegeteil, beispielsweise die Feder 50 der Fig. 3a, in eine Kavität für Spritzgieß, d. h. in ein Spritzgießwerkzeug, eingelegt. Anschließend wird in einem weiteren optionalen Schritt **84** ein Kolbenelement 4 durch Spritzgießen hergestellt. Soll das Kolbenelement einen oder mehrere Führungsabschnitte aufweisen, können diese in Schritt 84 erzeugt werden. Es ist auch möglich, dass das Kolbenelement 4, als Drehteil aus Aluminium oder einem sonstigen Metall oder Kunststoff ausgebildet ist und entsprechend in das Spritzgießwerkzeug eingelegt wird. Anschließend wird in Schritt **86** eine Dichtung 6, 8, 72 an dem (im Spritzgießwerkzeug angeordnete) Kolbenelement 4 angespritzt. Zusätzlich kann in einem weiteren optionalen Schritt **88** eine oder mehrere weitere Dichtung 6, 8, 72 am Kolbenelement 4 angespritzt werden. Zusätzlich kann in einem weiteren optionalen Schritt **90** ein Führungsabschnitt 10, 12, 42, 56, 60, 66, 74 hergestellt, insbesondere am übrigen Kolbenelement 4 angespritzt, werden. Die Schritte 86, 88, 90 können in beliebiger Reihenfolge oder gleichzeitig ausgeführt werden.

## Patentansprüche

1. Geberkolben (1) für eine hydraulische Fahrzeugbremse (2), der in einem Geberzylinder der hydraulischen Fahrzeugbremse (2) längs der Geberkolbenlängsachse (L) reziprok bewegbar anordenbar ist, wobei der Geberkolben (1) ein Kolbenelement (4) mit zumindest einer Dichtung (6, 8, 72) aufweist und wobei die Dichtung (6, 8, 72) an dem Kolbenelement (4) angespritzt ist, wobei der Geberkolben (1) zumindest einen Führungsabschnitt (10, 12, 42, 56, 60, 66, 74) zur Führung des Geberkolbens (1) in dem Geberzylinder aufweist, wobei der Führungsabschnitt (10, 12, 42, 56, 60, 66, 74) in einer zur Längsachse (L) radialen Richtung zumindest abschnittsweise elastisch verformbar ist, wobei der Führungsabschnitt (10, 12, 42, 56, 60, 66, 74) zumindest teilweise aus einem anderen Material als das Kolbenelement (4) ausgebildet ist,
**dadurch gekennzeichnet,**
**dass** das Kolbenelement (4), die mindestens eine Dichtung (6, 8, 72) und der mindestens eine Führungsabschnitt (10, 12, 42, 56, 60, 66, 74) gemeinsam durch ein Mehrkomponenten-Spritzgießverfahren hergestellt sind.

2. Geberkolben gemäß Anspruch 1, **dadurch gekennzeichnet, dass** das Kolbenelement (4) mindestens eine umfangsseitige, radial nach außen offene Nut (14, 16) aufweist und die Dichtung (6, 8, 72) an drei Seiten an der Nut (14, 16) anliegt.

3. Geberkolben (1) gemäß Anspruch 1 oder 2, **dadurch gekennzeichnet, dass** der Führungsabschnitt (10, 12, 42, 56, 60, 66, 74) zumindest eine Aussparung (68) aufweist, die sich in einer axialen Richtung von einer Seite des Führungsabschnitts (10, 12, 42, 56, 60, 66, 74) zu der anderen Seite des Führungsabschnitts (10, 12, 42, 56, 60, 66, 74) erstreckt, sodass Fluid durch die Aussparung (68) von einer axialen Seite des Führungsabschnitts (10, 12, 42, 56, 60, 66, 74) zu der anderen Seite des Führungsabschnitts (10, 12, 42, 56, 60, 66, 74) leitbar ist.

4. Geberkolben (1) gemäß einem der vorhergehenden Ansprüche, **dadurch gekennzeichnet, dass** der Führungsabschnitt (10, 12, 42, 56, 60, 66, 74) Vorsprünge (62) aufweist, die sich in einer radialen Richtung nach außen wegerstrecken und die in Umfangsrichtung des Geberkolbens (1) voneinander beabstandet sind, wobei die Vorsprünge (62) derart ausgebildet sind, dass diese in radialer Richtung des Geberkolbens (1) elastisch verformbar sind.

5. Geberkolben (1) gemäß einem der vorhergehenden Ansprüche **dadurch gekennzeichnet, dass** der Führungsabschnitt (10, 12, 42, 56, 60, 66, 74) derart ausgebildet ist, dass dieser die Dichtung (6, 8, 72) abschnittsweise in axialer Richtung radial umfasst.

6. Geberkolben (1) gemäß einem der vorhergehenden Ansprüche, **dadurch gekennzeichnet, dass** in die Dichtung (6, 8, 72) zumindest eine Feder (50) integriert ist, wobei dieses derart ausgebildet ist, dass eine Dichtlippe oder Dichtkante der Dichtung (6, 8, 72) in radialer Richtung nach radial außen mit einer Federkraft beaufschlagt ist.

7. Geberkolben (1) gemäß einem der vorhergehenden Ansprüche , **dadurch gekennzeichnet, dass** zumindest eine weitere Dichtung (6, 8, 72) am Kolbenelement (4) angespritzt ist.

8. Geberkolben gemäß einem der vorhergehenden Ansprüche, **dadurch gekennzeichnet, dass** der Geberkolben (1) zumindest einen weiteren Führungsabschnitt (10, 12, 42, 56, 60, 66, 74) aufweist, der von dem ersten Führungsabschnitt (10, 12, 42, 56, 60, 66, 74) in axialer Richtung beabstandet angeordnet ist.

9. Geberkolben (1) gemäß einem der vorhergehenden Ansprüche, **dadurch gekennzeichnet, dass** der oder der jeweilige oder zumindest einer der Führungsabschnitt/e (10, 12, 42, 56, 60, 66, 74) zwei Segmente (26, 28) aufweist, wobei ein jeweiliges Segment (26, 28) auf einer jeweiligen axialen Seite einer oder der Dichtung (6, 8, 72) angeordnet ist.

10. Geberkolben (1) gemäß einem der vorhergehenden Ansprüche , **dadurch gekennzeichnet, dass** zumindest der erste und/oder jeder weitere Führungsabschnitt (10, 12, 42, 56, 60, 66, 74) zumindest eine Abstreifkante und/oder Abstreiflippe (82) aufweist, die sich von dem jeweiligen Führungsabschnitt (10, 12, 42, 56, 60, 66, 74) radial wegerstreckt.

11. Hydraulische Fahrzeugbremse (2) mit einem Geberkolben (1) gemäß einem der vorhergehenden Ansprüche.

12. Hydraulische Fahrzeugbremse (2) gemäß Anspruch 11, **dadurch gekennzeichnet, dass** diese für ein Fahrzeug mit einem Lenker, insbesondere ein Fahrrad, ausgebildet ist.

13. Verfahren (100) zum Herstellen eines Geberkolbens (1) gemäß einem der Ansprüche 1 bis 10 in einem Mehrkomponenten-Spritzgießverfahren, mit folgenden Verfahrensschritten, die in beliebiger Reihenfolge oder gleichzeitig ausgeführt werden können:
Spritzgießen des Kolbenelements (4);
Spritzgießen des mindestens einen Führungsabschnitts (10, 12, 42, 56, 60, 66, 74), insbesondere Anspritzen des mindestens einen Führungsabschnitts (10, 12, 42, 56, 60, 66, 74) an das Kolbenelement (4); und
Anspritzen der mindestens einen Dichtung (6, 8, 72) an das Kolbenelement (4).

14. Verfahren nach Anspruch 13, **dadurch gekennzeichnet, dass** vor dem Anspritzen der mindestens einen Dichtung (6, 8, 72) ein Einlegeteil, insbesondere eine Feder (50), in eine Kavität eines Spritzgießwerkzeugs der mindestens einen Dichtung (6, 8, 72) eingelegt wird.

## Claims

1. A master piston (1) for a hydraulic vehicle brake (2) which can be arranged in a master cylinder of the hydraulic vehicle brake (2) so as to be movable in a reciprocal manner along the master piston longitudinal axis (L), wherein the master piston (1) comprises a piston element (4) with at least one seal (6, 8, 72) and wherein the seal (6, 8, 72) is injection molded onto the piston element (4), wherein the master piston (1) has at least one guide portion (10, 12, 42, 56, 60, 66, 74) for guiding the master piston (1) in the master cylinder, wherein the guide portion (10, 12, 42, 56, 60, 66, 74) is elastically deformable at least in some portions in a radial direction to the longitudinal axis (L), wherein the guide portion (10, 12, 42, 56, 60, 66, 74) is formed at least partially from a different material than the piston element (4),
**characterized in that** the piston element (4), the at least one seal (6, 8, 72) and the at least one guide portion (10, 12, 42, 56, 60, 66, 74) are produced together by a multi-component injection molding method.

2. The master piston as claimed in claim 1, **characterized in that** the piston element (4) has at least one circumferential groove (14, 16) which is open radially outwards and the seal (6, 8, 72) bears on three sides against the groove (14, 16).

3. The master piston (1) as claimed in claim 1 or 2, **characterized in that** the guide portion (10, 12, 42, 56, 60, 66, 74) has at least one recess (68) which extends in an axial direction from one side of the guide portion (10, 12, 42, 56, 60, 66, 74) to the other side of the guide portion (10, 12, 42, 56, 60, 66, 74), so that fluid can be conducted through the recess (68) from an axial side of the guide portion (10, 12, 42, 56, 60, 66, 74) to the other side of the guide portion (10, 12, 42, 56, 60, 66, 74).

4. The master piston (1) as claimed in one of the preceding claims, **characterized in that** the guide portion (10, 12, 42, 56, 60, 66, 74) has projections (62) which extend away outwardly in a radial direction and which are spaced apart from one another in the circumferential direction of the master piston (1), wherein the projections (62) are configured such that they can be elastically deformed in the radial direction of the master piston (1).

5. The master piston (1) as claimed in one of the preceding claims, **characterized in that** the guide portion (10, 12, 42, 56, 60, 66, 74) is configured such that it radially encompasses the seal (6, 8, 72) in some portions in the axial direction.

6. The master piston (1) as claimed in one of the preceding claims, **characterized in that** at least one spring (50) is integrated in the seal (6, 8, 72), wherein this spring is configured such that a sealing lip or sealing edge of the seal (6, 8, 72) is subjected to a spring force radially outwardly in the radial direction.

7. The master piston (1) as claimed in one of the preceding claims, **characterized in that** the at least one further seal (6, 8, 72) is injection molded onto the piston element (4).

8. The master piston as claimed in one of the preceding claims, **characterized in that** the master piston (1) has at least one further guide portion (10, 12, 42, 56, 60, 66, 74) which is arranged spaced apart from the first guide portion (10, 12, 42, 56, 60, 66, 74) in the axial direction.

9. The master piston (1) as claimed in one of the preceding claims, **characterized in that** the or the respective guide portion or at least one of the guide portions (10, 12, 42, 56, 60, 66, 74) has two segments (26, 28), wherein one respective segment (26, 28) is arranged on one respective axial side of a seal or the seal (6, 8, 72).

10. The master piston (1) as claimed in one of the preceding claims, **characterized in that** at least the first and/or each further guide portion (10, 12, 42, 56, 60, 66, 74) has at least one scraper edge and/or scraper lip (82) which extends radially away from the respective guide portion (10, 12, 42, 56, 60, 66, 74).

11. A hydraulic vehicle brake (2) comprising a master piston (1) as claimed in one of the preceding claims.

12. The hydraulic vehicle brake (2) as claimed in claim 11, **characterized in that** it is configured for a vehicle with handlebars, in particular a bicycle.

13. Method (100) for producing a master piston (1) as claimed in one of the claims 1 to 10 in a multi-component injection molding method, comprising the following method steps, which can be carried out in any sequence or at the same time:
injection molding of the piston elemenet (4);
injection molding of the at least one guide portion (10, 12, 42, 56, 60, 66, 74), in particular injection molding of the at least one guide portion (10, 12, 42, 56, 60, 66, 74) onto the piston element (4); and
injection molding of the at least one seal (6, 8, 72) onto the piston element (4).

14. Method as claimed in claim 13, **characterized in that** prior to injection molding of the at least one seal (6, 8, 72), an insert part, in particular a spring (50), is inserted into a cavity of an injection mold of the at least one seal (6, 8, 72).

## Revendications

1. Piston émetteur (1) destiné à un frein hydraulique (2) de véhicule et pouvant être agencé avec faculté de mouvement alternatif dans un maître-cylindre dudit frein hydraulique (2) de véhicule, le long de l'axe longitudinal (L) dudit piston émetteur, lequel piston émetteur (1) comporte un plongeur (4) doté d'au moins une garniture d'étanchement (6, 8, 72), ladite garniture d'étanchement (6, 8, 72) étant surmoulée sur ledit plongeur (4), sachant que le piston émetteur (1) est pourvu d'au moins une zone de guidage (10, 12, 42, 56, 60, 66, 74) conçue pour guider ledit piston émetteur (1) dans le maître-cylindre, laquelle zone de guidage (10, 12, 42, 56, 60, 66, 74) est élastiquement déformable, au moins par tronçons, dans une direction radiale par rapport à l'axe longitudinal (L), ladite zone de guidage (10, 12, 42, 56, 60, 66, 74) étant constituée, au moins en partie, d'un matériau autre que celui du plongeur (4),
**caractérisé par le fait**
**que** le plongeur (4), la garniture d'étanchement (6, 8, 72) à présence minimale, et la zone de guidage (10, 12, 42, 56, 60, 66, 74) à présence minimale, sont fabriqués conjointement par un procédé de moulage par injection à composants multiples.

2. Piston émetteur selon la revendication 1, **caractérisé par le fait que** le plongeur (4) est muni d'au moins une rainure (14, 16) pratiquée dans le pourtour et ouverte vers l'extérieur dans le sens radial, et la garniture d'étanchement (6, 8, 72) est en applique contre trois côtés de ladite rainure (14, 16).

3. Piston émetteur (1) selon la revendication 1 ou 2, **caractérisé par le fait que** la zone de guidage (10, 12, 42, 56, 60, 66, 74) présente au moins un évidement (68) s'étendant dans une direction axiale, depuis l'un des côtés de la zone de guidage (10, 12, 42, 56, 60, 66, 74) vers l'autre côté de ladite zone de guidage (10, 12, 42, 56, 60, 66, 74), de telle sorte que du fluide puisse être guidé, par l'intermédiaire dudit évidement (68), depuis un côté axial de la zone de guidage (10, 12, 42, 56, 60, 66, 74) vers l'autre côté de ladite zone de guidage (10, 12, 42, 56, 60, 66, 74).

4. Piston émetteur (1) selon l'une des revendications précédentes, **caractérisé par le fait que** la zone de guidage (10, 12, 42, 56, 60, 66, 74) est nantie de saillies (62) qui s'étendent vers l'extérieur, dans une direction radiale, est sont distantes les unes des autres dans la direction du pourtour du piston émetteur (1), lesdites saillies (62) étant conçues de manière à pouvoir être déformées élastiquement dans la direction radiale dudit piston émetteur (1).

5. Piston émetteur (1) selon l'une des revendications précédentes, **caractérisé par le fait que** la zone de guidage (10, 12, 42, 56, 60, 66, 74) est conçue de telle sorte qu'elle ceinture radialement la garniture d'étanchement (6, 8, 72), par tronçons dans la direction axiale.

6. Piston émetteur (1) selon l'une des revendications précédentes, **caractérisé par le fait qu'**au moins un ressort (50) est intégré dans la garniture d'étanchement (6, 8, 72), ce dernier étant réalisé de façon telle qu'une lèvre d'étanchement, ou une arête d'étanchement de ladite garniture d'étanchement (6, 8, 72), soit sollicitée radialement vers l'extérieur par une force élastique dans la direction radiale.

7. Piston émetteur (1) selon l'une des revendications précédentes, **caractérisé par le fait qu'**au moins une garniture d'étanchement (6, 8, 72) supplémentaire est surmoulée sur le plongeur (4).

8. Piston émetteur (1) selon l'une des revendications précédentes, **caractérisé par le fait que** ledit piston émetteur (1) est doté d'au moins une zone de guidage (10, 12, 42, 56, 60, 66, 74) supplémentaire, disposée à distance de la première zone de guidage (10, 12, 42, 56, 60, 66, 74) dans la direction axiale.

9. Piston émetteur (1) selon l'une des revendications précédentes, **caractérisé par le fait que** la zone de guidage ou la zone de guidage considérée, voire au moins l'une des zones de guidage (10, 12, 42, 56, 60, 66, 74), comporte(nt) deux segments (26, 28), sachant qu'un segment (26, 28) respectif est disposé sur un côté axial respectif d'une, ou de la garniture d'étanchement (6, 8, 72).

10. Piston émetteur (1) selon l'une des revendications précédentes, **caractérisé par le fait qu'**au moins la première zone de guidage, et/ou chaque zone de guidage (10, 12, 42, 56, 60, 66, 74) supplémentaire, comporte(nt) une arête de raclage et/ou une lèvre de raclage (82) s'étendant, dans le sens radial, à partir de la zone de guidage (10, 12, 42, 56, 60, 66, 74) considérée.

11. Frein hydraulique (2) de véhicule, équipé d'un piston émetteur (1) conforme à l'une des revendications précédentes.

12. Frein hydraulique (2) de véhicule, selon la revendication 11, **caractérisé par le fait que** ledit frein est conçu pour un véhicule muni d'un guidon, pour une bicyclette en particulier.

13. Procédé (100) de fabrication d'un piston émetteur (1) conforme à l'une des revendications 1 à 10, dans un procédé de moulage par injection à composants multiples incluant les étapes opératoires suivantes, pouvant être effectuées dans n'importe quel ordre successif ou en simultanéité :
moulage du plongeur (4) par injection ;
moulage, par injection, de la zone de guidage (10, 12, 42, 56, 60, 66, 74) à présence minimale, notamment surmoulage, sur ledit plongeur (4), de ladite zone de guidage (10, 12, 42, 56, 60, 66, 74) à présence minimale ; et
surmoulage, sur ledit plongeur (4), de la garniture d'étanchement (6, 8, 72) à présence minimale.

14. Procédé selon la revendication 13, **caractérisé par le fait que**, préalablement au surmoulage de la garniture d'étanchement (6, 8, 72) à présence minimale, une pièce intégrée, un ressort (50) en particulier, est inséré(e) dans une cavité d'un outil de moulage par injection de ladite garniture d'étanchement (6, 8, 72) à présence minimale.
